# DEMANDE DE BREVET EUROPEEN

(11) **EP 1 646 176 A2**
(43) Date de publication de la demande: **12.04.2006**
(21) Numéro de dépôt: 04291499.4
(22) Date de dépôt: 15.06.2004
(51) Int. Cl.: H04L 9/32, H04Q 7/38

(54) **Attribution d'une autorisation d'accès à une ressource**

(30) Priorité: 25.06.2003 FR 0307655
(71) Demandeur: FRANCE TELECOM, 75015 Paris (FR)
(72) Inventeur: Clerc, Fabrice, 14550 Blainville sur Orne (FR)
(74) Mandataire: Joly, Jean-Jacques

(57) **Abrégé**

Procédé d'attribution d'autorisation d'accès à une ressource comprenant les étapes suivantes :
- connexion (E1) d'un utilisateur à un centre de gestion d'accès pour demander l'attribution à un tiers équipé d'un terminal mobile d'une autorisation d'accès à une ressource donnée,
- définition (E2) de conditions particulières réglementant l'autorisation d'accès,
- envoi (E3) par l'utilisateur des coordonnées du terminal mobile du tiers au centre de gestion d'accès,
- génération (E4) par le centre de gestion d'accès, de données d'accès en fonction de la ressource et des conditions particulières, et
- envoi (E5) des données d'accès sur le terminal mobile du tiers pour permettre à celui-ci d'être identifié par un dispositif de contrôle d'accès associé à ladite ressource afin d'autoriser l'accès du tiers à cette ressource.

## Description

### Arrière-plan de l'invention

L'invention concerne l'attribution d'une autorisation d'accès à une ressource quelconque qui peut être un bâtiment, un garage, un système informatique, une boîte aux lettres, ou un tout autre objet. L'invention s'adresse plus particulièrement à des personnes utilisant des téléphones mobiles, auxquels il est nécessaire de délivrer une autorisation temporaire ou ponctuelle d'accès à une ressource.

Un problème que l'invention essaye de résoudre est l'attribution à un tiers d'une autorisation d'accès à une ressource, de sorte que cette autorisation soit provisoire.

Un moyen connu pour qu'un utilisateur accède à certaines ressources, consiste par exemple, à taper un code confidentiel sur un clavier numéroté. Ainsi, pour conférer un droit d'accès à un tiers il suffit que l'utilisateur communique le code confidentiel à ce tiers. Un tel moyen présente plusieurs inconvénients.

Il ne permet pas de conférer un droit dont l'utilisateur contrôle la durée de validité. En effet, une fois qu'un tiers connaît le code, il peut le réutiliser, même à l'insu de l'utilisateur qui a fait bénéficier ce tiers du droit d'accès.

Il ne permet pas non plus de garantir au tiers, la pérennité du droit d'accès en cas d'événement extérieur incontrôlé par les protagonistes, par exemple lors d'un changement inopiné du code par une autorité quelconque.

En outre, rien ne peut empêcher qu'un droit d'accès de ce genre soit cessible, volontairement ou non, par des tiers non autorisés à le céder.

Par ailleurs, il est connu dans le brevet français du même déposant FR278920, un système de contrôle d'accès permettant de délivrer des droits d'accès électroniques, assortis d'une plage de validité horaire prédéterminée, à des utilisateurs amenés par leur activité professionnelle à accéder à certaines ressources à accès limité.

Toutefois, de tels systèmes permettent de délivrer des droits d'accès, selon des plages horaires prédéterminées, à l'initiative exclusive d'un prestataire de service bien déterminé, et à des utilisateurs préalablement autorisés.

De plus, ces systèmes nécessitent l'utilisation d'un moyen portable spécifique, appelé communément « clé électronique », destiné à recevoir, transporter, et présenter les droits d'accès.

Le brevet international WO 00/35178 décrit un système de contrôle d'accès à une ressource utilisant un téléphone mobile.

Toutefois, ce système nécessite le maintien et la gestion d'une base de données centralisée pour contenir les coordonnées des utilisateurs autorisés. Ce système impose également une vérification centralisée d'un identifiant envoyé par le téléphone mobile de l'utilisateur.

Ainsi, une mise à jour de la base de données est nécessaire en cas de perte ou de vol de l'équipement d'un usager autorisé ou au cas où l'autorisation d'accès serait épuisée ce qui présente une grande lourdeur de gestion.

### Objet et résumé de l'invention

L'invention a pour but de palier les inconvénients ci-dessus et de fournir un système et un procédé permettant à un utilisateur de conférer une autorisation d'accès à un tiers de façon contrôlée, simple, sécurisé, et rapide.

Ces buts sont atteints grâce à un procédé d'attribution d'autorisation d'accès à une ressource, caractérisé en ce qu'il comprend les étapes suivantes :
- connexion d'un utilisateur à un centre de gestion d'accès pour demander l'attribution à un tiers équipé d'un terminal mobile d'une autorisation d'accès à une ressource donnée,
- définition de conditions particulières réglementant l'autorisation d'accès,
- envoi par l'utilisateur des coordonnées du terminal mobile du tiers au centre de gestion d'accès,
- génération par le centre de gestion d'accès, de données d'accès en fonction de la ressource et desdites conditions particulières, et
- envoi desdites données d'accès sur le terminal mobile du tiers pour permettre à celui-ci d'être identifié par un dispositif de contrôle d'accès associé à ladite ressource afin d'autoriser l'accès du tiers à cette ressource.

Ainsi, tout utilisateur peut prendre, d'une manière simple et sécurisée l'initiative de délivrer à un tiers de son choix certaines facilités d'accès à une ressource, pourvu simplement que ce tiers soit muni d'un terminal portable classique.

Les conditions particulières réglementant l'autorisation d'accès peuvent comporter un accès temporaire ou un accès ponctuel à la ressource.

Avantageusement, la connexion de l'utilisateur au centre de gestion d'accès comporte une authentification de l'utilisateur par ledit centre de gestion d'accès.

Avantageusement, la connexion de l'utilisateur au centre de gestion d'accès peut comporter une vérification, par le centre de gestion d'accès, d'une corrélation entre la ressource et l'utilisateur.

Selon un mode particulier de l'invention, le procédé peut comporter une vérification, par le centre de gestion d'accès, du fait que le dispositif de contrôle d'accès est en mesure d'identifier les données d'accès envoyées sur le terminal mobile du tiers.

De préférence, le dispositif de contrôle d'accès identifie les données d'accès par un moyen cryptographique.

Selon un autre mode particulier de l'invention, le procédé peut comporter un paramétrage du dispositif de contrôle d'accès, par le centre de gestion d'accès, afin d'établir une cohérence entre ce dispositif de contrôle d'accès et les données d'accès envoyées sur le terminal mobile du tiers.

Avantageusement, le procédé selon l'invention comporte en outre une authentification du tiers, par le centre de gestion d'accès, avant l'envoi des données d'accès sur le terminal mobile dudit tiers.

L'identification du tiers, par le dispositif de contrôle d'accès, peut être mise en oeuvre par un protocole de contrôle d'accès, à travers une liaison entre le terminal mobile et le dispositif de contrôle d'accès.

L'invention vise aussi un système d'attribution d'autorisation d'accès à une ressource, caractérisé en ce qu'il comprend:
- un centre de gestion d'accès permettant de gérer une requête envoyée par un utilisateur demandant l'attribution à un tiers équipé d'un terminal mobile d'une autorisation d'accès à une ressource donnée, l'autorisation d'accès étant réglementée par de conditions particulières, et
- un dispositif de contrôle d'accès associé à ladite ressource permettant d'identifier des données d'accès sur le terminal mobile du tiers afin d'autoriser l'accès du tiers à cette ressource, lesdites données d'accès étant générées par le centre de gestion d'accès et envoyées par ce dernier sur le terminal mobile du tiers.

L'invention propose aussi un centre de gestion d'accès caractérisé en ce qu'il comporte :
- un module de communication destiné à recevoir une requête d'un utilisateur demandant l'attribution à un tiers équipé d'un terminal mobile d'une autorisation d'accès à une ressource donnée,
- une base de données comportant des références de l'utilisateur et de la ressource,
- une unité centrale de traitement d'information destinée à gérer la demande de l'utilisateur, et
- un module générateur destiné à créer des données d'accès en fonction de la ressource et de conditions particulières réglementant l'autorisation d'accès.

L'invention propose également un dispositif de contrôle d'accès caractérisé en ce qu'il comporte :
- un module de liaison destiné à entrer en liaison avec un terminal mobile,
- un module de vérification destiné à vérifier des données d'accès présentées par le terminal mobile, et
- un module de délivrance destiné à délivrer un accès à une ressource, lorsque la vérification faite par le module de vérification est satisfaite.

L'invention propose aussi un terminal mobile comportant un module de contrôle gérant un module de stockage et un module de connexion sans fil pour présenter des données d'accès, reçues du centre de gestion d'accès, au dispositif de contrôle d'accès.

L'invention vise aussi un programme informatique de gestion apte à être mis en oeuvre dans le centre de gestion d'accès et comprenant des instructions de code pour l'exécution d'une étape de gestion de la demande de l'utilisateur lorsque ledit programme est exécuté sur ledit centre de gestion d'accès.

L'invention vise encore un programme informatique de contrôle apte à être mis en oeuvre dans le dispositif de contrôle d'accès comprenant des instructions de code pour l'exécution d'une étape de vérification des données d'accès présentées par le terminal mobile, afin de délivrer un accès à une ressource lorsque ledit programme est exécuté sur ledit dispositif de contrôle d'accès.

L'invention vise aussi un programme informatique de traitement apte à être mis en oeuvre dans le module de contrôle du terminal mobile comprenant des instructions de code pour l'exécution d'une étape de gestion des modules de stockage et de connexion sans fil afin de présenter les données d'accès au dispositif de contrôle d'accès lorsque ledit programme est exécuté sur ledit module de contrôle du terminal mobile.

### Brève description des dessins

D'autres particularités et avantages de l'invention ressortiront à la lecture de la description faite, ci-après, à titre indicatif mais non limitatif, en référence aux dessins annexés, sur lesquels :
- la figure 1 est une vue très schématique et générale d'un système d'attribution d'autorisation d'accès à une ressource selon l'invention ;
- la figure 2 est une vue très schématique montrant les étapes du procédé d'attribution d'autorisation d'accès à une ressource selon l'invention ; et
- la figure 3 est une vue très schématique montrant avec plus de détails certains éléments de la figure 1.

### Description détaillée de modes de réalisation

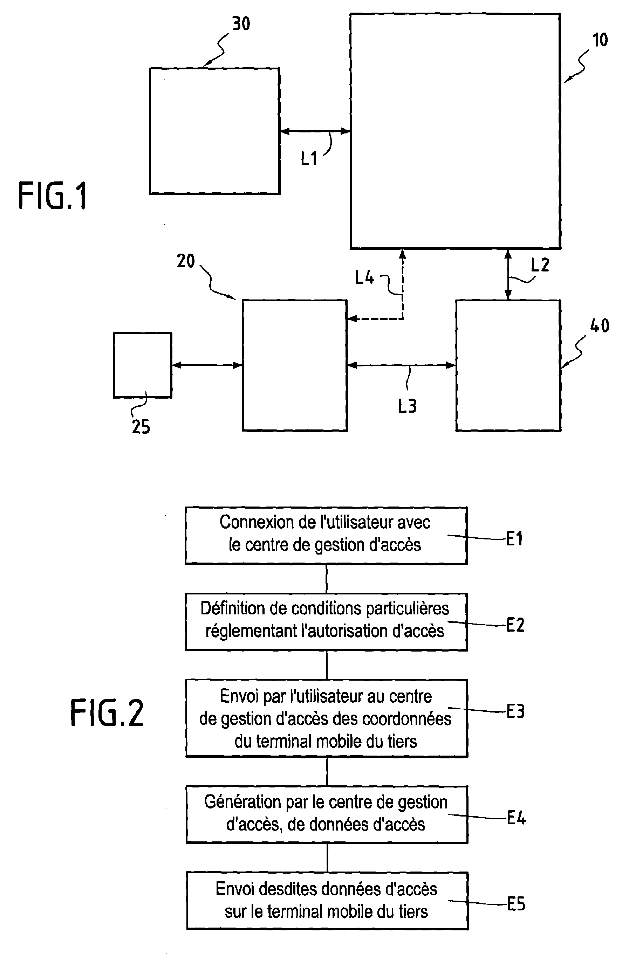

Conformément à l'invention, la figure 1, montre très schématiquement un système d'attribution d'autorisation d'accès comprenant un centre de gestion d'accès 10 et un dispositif de contrôle d'accès 20 associé à une ressource 25.

Le centre de gestion d'accès 10 permet de gérer une requête envoyée par un utilisateur, au moyen d'un terminal utilisateur 30 demandant l'attribution à un tiers équipé d'un terminal mobile 40 d'une autorisation d'accès à une ressource 25 donnée, et de sorte que l'autorisation d'accès soit réglementée par des conditions particulières.

Le dispositif de contrôle d'accès 20 permet d'identifier le tiers afin de lui autoriser l'accès à la ressource 25, grâce à des données d'accès que le centre de gestion d'accès 10 a envoyées sur le terminal mobile 40 du tiers.

Par utilisateur, on entend toute personne qui est abonnée auprès d'un opérateur de télécommunications délivrant un service correspondant à l'objet de la présente invention. Autrement dit, un utilisateur est une personne qui est reconnue et identifiée par le centre de gestion d'accès 10 comme étant un abonné de ce centre.

En effet, pour devenir utilisateur, il faut qu'au préalable cette personne souscrive auprès de ce service en indiquant son identité, ses coordonnées, les caractéristiques de la ou des ressources 25 munies de dispositifs de contrôle d'accès 20 prévus à cet effet, auxquelles il souhaite pouvoir conférer un droit d'accès à un tiers, à condition toutefois d'y être autorisé, ce que vérifie préalablement le service.

Cette vérification peut être envisagée par exemple en croisant des informations cohérentes telles que le numéro de téléphone de l'utilisateur, son adresse électronique, son adresse postale, et les références de la ressource 25. Par exemple, si la ressource est un parking muni d'une barrière automatique, il doit s'agir du parking de la résidence de l'utilisateur.

La vérification peut aussi être envisagée en validant les caractéristiques de la demande de l'utilisateur par un agent en qui le service a confiance. L'agent peut par exemple être un syndic ou un gardien du lieu d'habitation de l'utilisateur.

Ensuite, à chaque fois que l'utilisateur souhaite l'attribution à un tiers d'une autorisation d'accès à une ressource 25, le procédé selon l'invention, comprend plusieurs étapes, comme illustré sur la figure 2.

Au premier lieu (étape E1), l'utilisateur entre en connexion avec le centre de gestion d'accès 10 afin d'envoyer une requête demandant l'attribution à un tiers équipé d'un terminal mobile 40 d'une autorisation d'accès à une ressource 25 donnée.

De manière non limitative, l'utilisateur entre en connexion avec le centre de gestion d'accès 10 au moyen d'une liaison L1 qui peut être une liaison téléphonique ou une liaison Internet.

Avantageusement, cette connexion comporte une authentification de l'utilisateur par le centre de gestion d'accès 10.

En effet, l'authentification de l'utilisateur peut être réalisée par la vérification du simple numéro de téléphone de l'utilisateur au cas où ce dernier aurait utilisé son téléphone portable ou fixe.

De même, l'authentification de l'utilisateur peut être réalisée par la vérification de l'adresse électronique de l'utilisateur au cas où ce dernier aurait utilisé une liaison Internet.

Pour une meilleure sécurité, il est aussi envisageable que l'authentification de l'utilisateur soit réalisée par un code confidentiel saisi par l'utilisateur sur un clavier à touche de son terminal 30.

Eventuellement, l'authentification de l'utilisateur peut être réalisée par une authentification vocale ou par une méthode de numérotation téléphonique à fréquence vocale du type jeton à appel à tonalité multifréquence « DTMF ».

En outre, une authentification forte basée sur un moyen cryptographique peut aussi être utilisée pour l'authentification de l'utilisateur par le centre de gestion d'accès 10. Cette authentification forte peut par exemple, être basée sur un protocole « défi-réponse » et un mécanisme cryptographique à clé publique.

Dans ce cas, le centre de gestion d'accès 10 calcule un « aléa » et l'envoie au terminal 30 de l'utilisateur comme un « défi ». Alors, le terminal 30 de l'utilisateur calcule une signature numérique de l'aléa au moyen d'une clé cryptographique de signature privée et renvoie cette signature « réponse » au centre de gestion d'accès 10. A son tour, le centre de gestion d'accès 10 vérifie la signature au moyen d'une clé cryptographique de vérification publique, sachant qu'une vérification positive atteste de l'origine de la clé de signature, et donc de l'identité de l'utilisateur.

Dans sa requête, l'utilisateur indique la ressource 25 dont il souhaite autoriser l'accès au tiers. L'indication peut par exemple être faite par la saisie d'une référence prédéfinie de la ressource 25.

Le centre de gestion d'accès 10, vérifie l'existence d'une corrélation entre la ressource 25 et l'utilisateur. Par exemple, en comparant la référence saisie par l'utilisateur à celle indiquée au moment de son adhésion au service.

Ensuite à l'étape E2, de conditions particulières réglementant l'autorisation d'accès sont définies. Cette définition peut émaner de l'utilisateur, du centre de gestion d'accès 10, ou des deux.

En effet, pour certaines ressources et pour des raisons de sécurité ou de contraintes particulières, le centre de gestion d'accès 10 peut imposer les plages horaires, ou le nombre de fois pendant lesquelles il est possible d'accéder à la ressource.

Bien entendu, il est aussi possible que l'utilisateur définisse certaines conditions en respectant des limites imposées par le centre de gestion d'accès 10. Par exemple, le centre de gestion d'accès 10 peut imposer ou définir la durée d'accès, tandis que l'utilisateur peut définir la date de départ de cette durée.

Il est aussi possible que les conditions particulières réglementant l'autorisation d'accès soient entièrement définies par l'utilisateur, comme dans l'exemple précité d'accès à un emplacement de parking de l'utilisateur.

Ces conditions particulières réglementant l'autorisation d'accès peuvent comporter un accès temporaire à la ressource 25. L'accès temporaire est alors défini par un intervalle de temps compris entre deux dates. La date peut être précisée en année, mois, jour, heure, minute, ou seconde. L'accès temporaire peut aussi être défini comme une réunion d'une pluralité d'intervalles temporels.

En outre, les conditions particulières réglementant l'autorisation d'accès peuvent comporter un accès ponctuel, c'est-à-dire un accès limité ou valable pour un nombre restreint de fois. L'accès peut aussi être défini comme étant à la fois temporaire et ponctuel.

Plus généralement, ces conditions particulières réglementant l'autorisation d'accès peuvent comporter d'autres paramètres autres que temporels ou ponctuels. Par exemple, dans le cas d'un système informatique, la ressource peut être subdivisée en plusieurs niveaux d'accès, et dans ce cas, les conditions particulières peuvent réglementer l'autorisation d'accès selon une certaine hiérarchie.

A l'étape E3, l'utilisateur envoi au centre de gestion d'accès 10, les coordonnées du terminal mobile 40 du tiers. Ce terminal mobile 40 peut être un téléphone mobile, un assistant numérique personnel « PDA », ou un autre équipement portable de communication.

Eventuellement, l'utilisateur indique l'identité et les coordonnées du tiers, et le cas échéant le moyen d'authentifier ce tiers.

En effet, l'utilisateur peut définir des conditions que le tiers doit satisfaire, pour que l'accès lui soit effectivement autorisé.

Par ailleurs, en fonction du niveau de sécurité souhaité, et des moyens dont dispose l'utilisateur, le centre de gestion d'accès 10 peut demander à cet utilisateur de signer, par un moyen cryptographique, les différents éléments constitutifs de sa demande, et en particulier les caractéristiques de la ressource 25 dont il souhaite délivrer l'accès au tiers, et l'identité de ce tiers.

En réponse à la requête de l'utilisateur, le centre de gestion d'accès 10 génère, à l'étape E4, des données d'accès en fonction des éléments constitutifs de cette demande, et en particulier en fonction de la ressource 25 et des conditions particulières réglementant l'autorisation d'accès.

Ensuite, le centre de gestion d'accès 10 entre en contact au moyen d'une liaison L2 avec le terminal mobile 40 du tiers, grâce aux coordonnées de ce terminal mobile 40 communiquées par l'utilisateur, pour envoyer, à l'étape E5, les données d'accès sur le terminal mobile 40 du tiers pour permettre à celui-ci d'être identifié par le dispositif de contrôle d'accès 20 associé à la ressource 25 afin d'autoriser l'accès du tiers à cette ressource.

Eventuellement, pour une meilleure sécurité, une authentification du tiers, par le centre de gestion d'accès 10 est réalisée avant l'envoi des données d'accès sur le terminal mobile 40 du tiers.

En effet, le centre de gestion d'accès 10 peut demander au tiers de s'authentifier, par exemple en saisissant un code confidentiel convenu préalablement avec l'utilisateur, qui l'aura lui-même communiqué au centre de gestion d'accès 10 au moment de la demande. Il est aussi envisageable que le code ait été communiqué, par le centre de gestion d'accès 10 à l'utilisateur, afin que ce dernier le communique à son tour au tiers.

On notera que, selon le niveau de sécurité souhaité, l'authentification du tiers peut être réalisée par d'autres moyens, comme par exemple au moyen du numéro de téléphone du tiers, de l'adresse électronique du tiers, ou grâce à une authentification forte basée sur un moyen cryptographique.

Lorsque le tiers se présente au voisinage ou devant le dispositif de contrôle d'accès 20 associé à la ressource 25, son identification par ce dernier est mise en oeuvre par un protocole de contrôle d'accès, à travers une liaison L3 entre le terminal mobile 40 et le dispositif de contrôle d'accès 20.

La liaison L3 entre le terminal mobile 40 du tiers et le dispositif de contrôle d'accès 20 est de préférence une liaison de transmission sans fil de type radio (Bluetooth, Wifi, etc.), infrarouge, ou toute autre liaison locale de transmission.

En générale, le dispositif de contrôle d'accès 20 comporte un mécanisme du type cryptographique cohérent avec les données que le centre de gestion d'accès 10 envoi sur le terminal mobile 40 du tiers.

Eventuellement, le centre de gestion d'accès 10, peut vérifier par une liaison L4, entre lui et le dispositif de contrôle d'accès 20, si ce dernier est en mesure d'identifier les données d'accès envoyées sur le terminal mobile 40 du tiers. Par exemple, au cas où le dispositif de contrôle d'accès 20 identifierait les données d'accès par un moyen cryptographique, le centre de gestion d'accès 10 s'assure que ce dispositif de contrôle d'accès 20 dispose des algorithmes et clés cryptographiques nécessaires à cette vérification.

Il est aussi envisageable qu'un paramétrage du dispositif de contrôle d'accès 20, soit réalisé par le centre de gestion d'accès 10, afin d'établir une cohérence entre ce dispositif de contrôle d'accès 20 et les données d'accès envoyées sur le terminal mobile 40 du tiers. Ce paramétrage est de préférence réalisé avant l'envoi des données d'accès sur le terminal mobile 40 du tiers.

On notera que, la liaison L4 met en relation le centre de gestion d'accès 10 avec le dispositif de contrôle d'accès 20 au moyen d'une liaison téléphonique avec ou sans fil, ou éventuellement, au moyen d'une liaison Internet.

Le procédé selon l'invention est alors avantageux à la fois pour l'utilisateur et pour le tiers.

En effet, l'utilisateur a la possibilité de fournir de manière simple et sécurisée, à un tiers de son choix certaines facilités d'accès, pourvu simplement que ce tiers soit muni d'un terminal mobile.

Cela permet par exemple à un utilisateur d'autoriser facilement des convives invités à accéder à un parking privatif dans la mesure ou ce parking est muni d'un dispositif de contrôle d'accès 20 commandable à distance.

Un autre exemple non limitatif consiste pour un utilisateur absent de son domicile, de pouvoir le cas échéant prêter « à distance » son logement à un tiers de ses connaissances, sans la nécessité d'une organisation préalable, sans obligation de déléguer à une autre personne la délivrance physique de l'accès au logement en question. Bien entendu, cet accès ne sera possible que pour un logement muni d'un dispositif de contrôle d'accès 20 conforme à l'invention.

Par ailleurs, les tiers recevant les droits d'accès, ont ainsi la possibilité de bénéficier d'une autorisation facilitée d'accéder à certaines ressources 25, et moyennant le minimum d'effort. Par exemple, des invités ont la possibilité d'accéder à un parking privatif, sans être obligé de descendre de voiture, ni de se déplacer pour requérir l'autorisation d'accès au parking.

En outre, des gestionnaires de certaines ressources 25 à accès contrôlé, ont la possibilité de s'affranchir de la contrainte représentée par un trop grand nombre de visiteurs occasionnels à qui il faut délivrer un accès.

Un exemple d'un mode de réalisation de l'invention concernant des invités d'un utilisateur qui sont autorisés à accéder à son parking privatif est maintenant décrit.

Monsieur X (utilisateur), abonné au service, attend des invités, Monsieur et Madame Y (tiers), pour déjeuner. Monsieur X habite un appartement au sein d'un domaine résidentiel, muni notamment d'un parking privatif (ressource 25), dont Monsieur X souhaiterait donner un accès temporaire à ses invités.

Alors, Monsieur X entre en connexion avec le centre de gestion d'accès 10 en composant sur son téléphone fixe ou mobile le numéro lui permettant d'entrer en contact avec ce centre. Monsieur X a aussi la possibilité d'utiliser un accès via Internet pour se connecter au centre de gestion d'accès 10.

Monsieur X se fait reconnaître comme abonné ou utilisateur en s'authentifiant par la saisie d'un code confidentiel préalablement mis au point au moment de son abonnement au service. Compte tenu de l'enjeu, un recours à une authentification faible est suffisant. On peut même envisager que Monsieur X ait seulement à prouver son appartenance à un groupe d'utilisateurs privilégiés, par exemple les résidents abonnés du domaine résidentiel où il habite.

Monsieur X indique qu'il souhaite avoir recours au service, par exemple en tapant le chiffre correspondant à cette option, sur invitation d'un menu vocal, pour délivrer un droit d'accès à un tiers. Il précise les caractéristiques de la ressource, et éventuellement les conditions non permanentes à respecter, par exemple un accès unique, ce jour, entre 12h15 et 13h00.

Monsieur X indique également le numéro de téléphone mobile du tiers et éventuellement l'identité de Monsieur et/ou Mme Y et précise le mode d'authentification requis. Dans un cas comme celui-là, par exemple, ce mode d'authentification pourrait très bien être imposé par le syndic du domaine résidentiel.

Eventuellement, le comportement du dispositif de contrôle d'accès 20, associé à la barrière automatique (non représentée) du parking privatif de Monsieur X, peut être configuré ou paramétré à distance par le centre de gestion d'accès 10, grâce à une liaison dédiée à cet effet, et au moyen d'un outil connu en soi de télé-administration pour le faire basculer dans une configuration dans lequel il accepte la présentation de droits d'accès provisoire, tels que celui qui va bientôt être présenté par Mr et Mme Y.

On notera que, le paramétrage n'est pas nécessaire au cas où le dispositif de contrôle d'accès 10 serait disposé à accepter tout droit d'accès, pourvu que la vérification de la signature soit positive.

La demande de l'utilisateur est prise en compte par le centre de gestion d'accès 10, qui entre en contact avec Mr et Mme Y, en composant le numéro d'appel de leur téléphone mobile 40, communiqué par l'utilisateur.

Eventuellement, le centre de gestion d'accès 10 vérifie leur identité en les invitant à s'authentifier par la saisie d'un code confidentiel par exemple préalablement convenu avec Mr X, et communiqué par ce dernier au service, selon les modalités définies précédemment. Par exemple, un mot de passe communiqué préalablement par Mr X pourrait s'avérer largement suffisant.

Ensuite, le centre de gestion d'accès 10 leur délivre par exemple, par SMS sur leur téléphone mobile 40, une autorisation d'accès, sous forme d'une signature cryptographique, valable une fois ce jour, entre 12h15 et 13h00, pour entrer dans le parking privatif de Mr X.

Monsieur et Madame Y se présentent par exemple à 12h45 devant le dispositif de contrôle d'accès 20 associé à la barrière automatique du parking privatif de Monsieur X.

Monsieur et Madame Y présentent le droit d'accès qui leur a été fourni précédemment, cette présentation pouvant être réalisée soit en composant un numéro d'appel du dispositif de contrôle d'accès 20, soit en utilisant un moyen de communication (IR, WiFi, sans contact, etc) autorisé par la proximité du dispositif de contrôle d'accès 20 et des accédants (Mr et Mme Y).

Sur vérification positive de ce droit, au moyen d'un mécanisme cryptographique de vérification, contenus dans le dispositif de contrôle d'accès 20, les conditions étant satisfaites, la barrière se lève pour leur donner accès au parking.

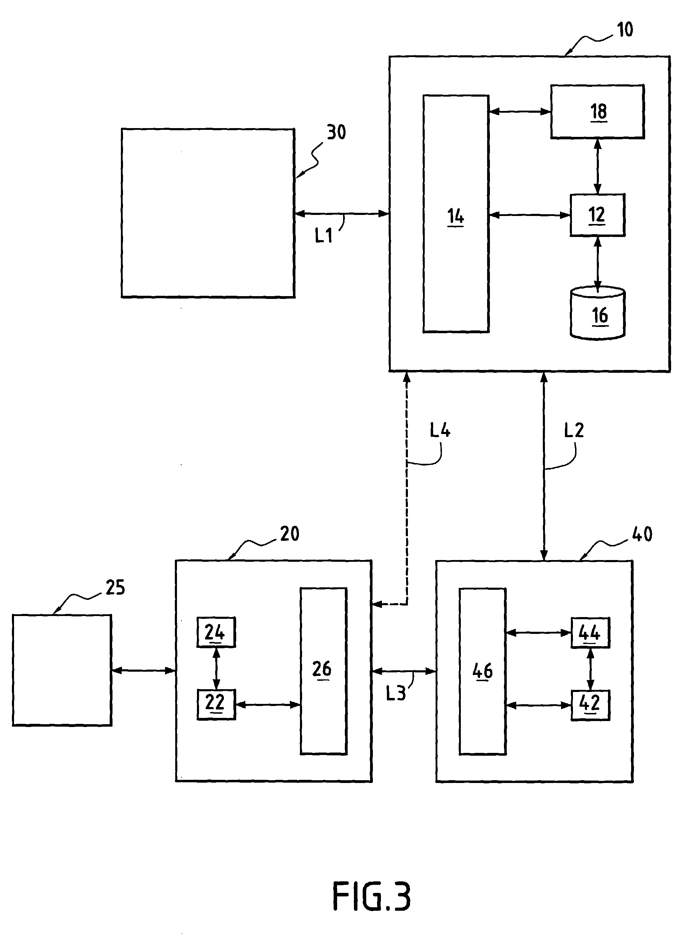

La figure 3 est une vue très schématique montrant avec plus de détail un mode particulier de réalisation du système d'autorisation d'accès à une ressource, selon l'invention.

Le système comprend un centre de gestion d'accès 10 et un dispositif de contrôle d'accès 20 associé à une ressource 25.

Le centre de gestion d'accès 10 comprend une unité centrale 12 de traitement d'informations contrôlant un module de communication 14 du type téléphonique ou Internet, une ou plusieurs bases de données 16 relatives aux utilisateurs, et un module générateur 18 de droit d'accès.

Le module de communication 14 est destiné à recevoir une requête d'un utilisateur demandant l'attribution à un tiers équipé d'un terminal mobile 40 d'une autorisation d'accès à une ressource donnée.

La base de données 16 comporte les références de l'utilisateur et de la ressource 25.

L'unité centrale 12 de traitement d'information est destinée à gérer la demande de l'utilisateur.

En effet, cette unité centrale 12 comporte un programme informatique de gestion comprenant des instructions de code nécessaires à l'exécution d'une étape de gestion de la demande de l'utilisateur.

Enfin, le module générateur 18 est destiné à créer des données d'accès en fonction de la ressource et de conditions particulières réglementant l'autorisation d'accès.

Le dispositif de contrôle d'accès 20 comprend un module de vérification 22 relié à un module de délivrance d'accès 24 et à un module de liaison sans fil 26.

Ainsi, lorsque le module de communication 14 du centre de gestion d'accès 10 reçoit, via la liaison L1, une demande ou requête émanant du terminal 30 appartenant à un utilisateur, l'unité centrale 12 de traitement d'information commence à gérer cette demande.

Dans un premier temps, l'unité centrale 12 de traitement d'information peut procéder à l'authentification de l'utilisateur, selon le moyen envisagé.

Par exemple, pour une authentification au moyen d'un code confidentiel, l'unité centrale 12 compare le code saisi par l'utilisateur avec celui stocké dans la base de données 16, au moment de l'abonnement ou l'inscription de ce même utilisateur.

Pour une authentification vocale, l'unité centrale 12 compare l'échantillon reçu avec l'échantillon stocké dans la base de données 16, au moment de l'inscription de l'utilisateur.

Pour une authentification forte basée sur des mécanismes cryptographiques, l'unité centrale 12 dialogue avec le terminal 30 de l'utilisateur selon par exemple un protocole de défi-réponse.

Ensuite, l'unité centrale 12 procède à la vérification de la cohérence de la requête.

Par exemple, l'unité centrale 12 vérifie si des conditions particulières fixées par l'utilisateur sont réalistes pour qu'elles soient satisfaites.

L'unité centrale 12 peut aussi vérifier si l'utilisateur a le droit d'effectuer une requête relative à la ressource 25 mentionnée en vérifiant dans les bases de données 16 que l'utilisateur est bien autorisé à confier un droit d'accès à cette ressource 25. Elle peut aussi vérifier si les références du tiers bénéficiaire du droit d'accès sont valides.

Eventuellement, l'unité centrale 12 vérifie la signature cryptographique de la requête pour s'assurer de son intégrité. Ceci évite qu'elle ait été modifiée frauduleusement au cours de son acheminement depuis l'utilisateur jusqu'au centre de gestion d'accès 10.

Puis, le centre de gestion d'accès 10 entre éventuellement en contact (liaison L4) avec le dispositif de contrôle d'accès 20 pour le paramétrer ou vérifier qu'il est déjà en mesure de réaliser le contrôle d'accès vis-à-vis du tiers.

Ensuite, l'unité centrale 12 donne le relais au module générateur de droit d'accès 18, qui va créer les données d'accès qui seront envoyées sur le terminal mobile 40 du tiers. Ces données d'accès permettent la mise en oeuvre d'un protocole de contrôle d'accès entre le terminal mobile 40 du tiers et le dispositif de contrôle d'accès 20 pour l'identification du tiers.

Si l'identification du tiers doit être réalisée par une présentation d'un mot de passe, le module générateur 18 crée des données d'accès associées à ce mot de passe et aux conditions particulières définissant l'autorisation d'accès afin que ces données soient acceptées par le dispositif de contrôle d'accès 20 concerné.

S'il s'agit d'une vérification de signature cryptographique dans le cadre d'une authentification statique, le module générateur 18 crée les données d'accès en forme de signature.

S'il s'agit d'une vérification de signature cryptographique dans le cadre d'une authentification dynamique, dans le cas où le terminal mobile 40 du tiers dispose d'un potentiel de calcul cryptographique nécessaire, le module générateur 18 crée des données d'accès en forme de clé de session de signature, qui permet de signer un aléa fourni par le dispositif de contrôle d'accès 20 au terminal mobile 40 du tiers.

Ces données d'accès sont ensuite envoyées sur le terminal mobile 40 du tiers, par le module de communication 14 du centre de gestion d'accès 10.

D'une manière générale, un terminal mobile 40 comporte un module de contrôle 42, un module de stockage 44 et un module de connexion sans fil 46.

Les données d'accès reçues par le terminal mobile 40 du tiers sont stockées dans le module de stockage 44. Ainsi, lorsque le terminal mobile 40 est en liaison avec le dispositif de contrôle d'accès 20, le module de contrôle 42 du terminal mobile 40 gère le module de stockage 44 et le module de connexion sans fil 46 pour présenter ces données d'accès, au dispositif de contrôle d'accès 20, au travers de la liaison L3.

En effet, le module de contrôle 42 du terminal mobile 40 comporte un programme informatique de traitement comprenant des instructions de code nécessaires à l'exécution d'une étape de gestion des modules de stockage 44 et de connexion sans fil 46 afin de présenter les données d'accès au dispositif de contrôle d'accès 20.

Lorsque, le module de liaison 26 du dispositif de contrôle d'accès 20 entre en liaison avec le terminal mobile 40, le module de vérification 22 vérifie les données d'accès présentées par le terminal mobile 40. Si la vérification est satisfaite, alors le module de délivrance d'accès 24 du dispositif de contrôle d'accès 20 délivre au tiers un accès à la ressource 25. Par exemple, si la ressource 25 donnée est un garage, le module de délivrance d'accès actionne un moteur pour ouvrir la barrière ou la porte de ce garage.

En effet, le dispositif de contrôle d'accès 20 comporte un programme informatique de contrôle comprenant des instructions de code nécessaires à l'exécution d'une étape de vérification des données d'accès présentées par le terminal mobile 40, afin de délivrer un accès à la ressource 25.

## Revendications

1. Procédé d'attribution d'autorisation d'accès à une ressource, **caractérisé en ce qu'**il comprend les étapes suivantes :
- connexion (E1) d'un utilisateur à un centre de gestion d'accès (10) pour demander l'attribution à un tiers équipé d'un terminal mobile (40) d'une autorisation d'accès à une ressource (25) donnée,
- définition (E2) de conditions particulières réglementant l'autorisation d'accès,
- envoi (E3) par l'utilisateur des coordonnées du terminal mobile (40) du tiers au centre de gestion d'accès (10),
- génération (E4) par le centre de gestion d'accès (10), de données d'accès en fonction de la ressource (25) et desdites conditions particulières, et
- envoi (E5) desdites données d'accès sur le terminal mobile (40) du tiers pour permettre à celui-ci d'être identifié par un dispositif de contrôle d'accès (20) associé à ladite ressource (25) afin d'autoriser l'accès du tiers à cette ressource (25).

2. Procédé selon la revendication 1, **caractérisé en ce que** les conditions particulières réglementant l'autorisation d'accès comportent un accès temporaire à la ressource.

3. Procédé selon la revendication 1, **caractérisé en ce que** les conditions particulières réglementant l'autorisation d'accès comportent un accès ponctuel à la ressource.

4. Procédé selon la revendication 1, **caractérisé en ce que** la connexion (E1) de l'utilisateur au centre de gestion d'accès (10) comporte une authentification de l'utilisateur par ledit centre de gestion d'accès (10).

5. Procédé selon la revendication 1, **caractérisé en ce que** la connexion (E1) de l'utilisateur au centre de gestion d'accès (10) comporte une vérification, par le centre de gestion d'accès (10), d'une corrélation entre la ressource (25) et l'utilisateur.

6. Procédé selon la revendication 1, **caractérisé en ce qu'**il comporte en outre une vérification, par le centre de gestion d'accès (10), du fait que le dispositif de contrôle d'accès (20) est en mesure d'identifier les données d'accès envoyées sur le terminal mobile (40) du tiers.

7. Procédé selon la revendication 1, **caractérisé en ce que** le dispositif de contrôle d'accès (20) identifie les données d'accès par un moyen cryptographique.

8. Procédé selon la revendication 1, **caractérisé en ce qu'**il comporte en outre un paramétrage du dispositif de contrôle d'accès (20), par le centre de gestion d'accès (10), afin d'établir une cohérence entre ce dispositif de contrôle d'accès (20) et les données d'accès envoyées sur le terminal mobile (40) du tiers.

9. Procédé selon la revendication 1, **caractérisé en ce qu'**il comporte en outre une authentification du tiers, par le centre de gestion d'accès (10), avant l'envoi des données d'accès sur le terminal mobile (40) dudit tiers.

10. Procédé selon la revendication 1, **caractérisé en ce que** l'identification du tiers, par le dispositif de contrôle d'accès (20), est mise en oeuvre par un protocole de contrôle d'accès, à travers une liaison (L3) entre le terminal mobile (40) et le dispositif de contrôle d'accès (20).

11. Système d'attribution d'autorisation d'accès à une ressource, **caractérisé en ce qu'**il comprend:
- un centre de gestion d'accès (10) permettant de gérer une requête envoyée par un utilisateur demandant l'attribution à un tiers équipé d'un terminal mobile (40) d'une autorisation d'accès à une ressource (25) donnée, l'autorisation d'accès étant réglementée par des conditions particulières, et
- un dispositif de contrôle d'accès (20) associé à ladite ressource (25) permettant d'identifier des données d'accès sur le terminal mobile (40) du tiers afin d'autoriser l'accès du tiers à cette ressource (25), lesdites données d'accès étant générées par le centre de gestion d'accès (10) et envoyées par ce dernier sur le terminal mobile (40) du tiers.

12. Système la revendication 11, **caractérisé** en ce le dispositif de contrôle d'accès (20) comporte un moyen cryptographique permettant d'identifier les données d'accès.

13. Centre de gestion d'accès **caractérisé en ce qu'**il comporte :
- un module de communication (14) destiné à recevoir une requête d'un utilisateur demandant l'attribution à un tiers équipé d'un terminal mobile (40) d'une autorisation d'accès à une ressource (25) donnée,
- une base de données (16) comportant des références de l'utilisateur et de la ressource (25),
- une unité centrale (12) de traitement d'information destinée à gérer la demande de l'utilisateur, et
- un module générateur (18) destiné à créer des données d'accès en fonction de la ressource (25) et de conditions particulières réglementant l'autorisation d'accès.

14. Dispositif de contrôle d'accès **caractérisé en ce qu'**il comporte :
- un module de liaison (26) destiné à entrer en liaison avec un terminal mobile (40),
- un module de vérification (22) destiné à vérifier des données d'accès présentées par le terminal mobile (40), et
- un module de délivrance (24) destiné à délivrer un accès à une ressource (25), lorsque la vérification faite par le module de vérification (22) est satisfaite.

15. Terminal mobile **caractérisé en ce qu'**il comporte un module de contrôle (42) gérant un module de stockage (44) et un module de connexion sans fil (46) pour présenter des données d'accès, reçues du centre de gestion d'accès selon la revendication 13, au dispositif de contrôle d'accès selon la revendication 14.

16. Programme informatique de gestion apte à être mis en oeuvre dans le centre de gestion d'accès selon la revendication 13, **caractérisé en ce que** ledit programme comprend des instructions de code pour l'exécution d'une étape de gestion de la demande de l'utilisateur lorsque ledit programme est exécuté sur ledit centre de gestion d'accès.

17. Programme informatique de contrôle apte à être mis en oeuvre dans le dispositif de contrôle d'accès selon la revendication 14, **caractérisé en ce que** ledit programme comprend des instructions de code pour l'exécution d'une étape de vérification des données d'accès présentées par le terminal mobile (40), afin de délivrer un accès à une ressource (25) lorsque ledit programme est exécuté sur ledit dispositif de contrôle d'accès.

18. Programme informatique de traitement apte à être mis en oeuvre dans le module de contrôle du terminal mobile selon la revendication 15, **caractérisé en ce que** ledit programme comprend des instructions de code pour l'exécution d'une étape de gestion des modules de stockage (44) et de connexion sans fil (46) afin de présenter les données d'accès au dispositif de contrôle d'accès lorsque ledit programme est exécuté sur ledit module de contrôle du terminal mobile.
